# FASCICULE DE BREVET EUROPEEN

(11) **EP 2 738 894 B1**
(45) Date de publication et mention de la délivrance du brevet: **10.06.2015**
(21) Numéro de dépôt: 13306624.1
(22) Date de dépôt: 27.11.2013
(51) Int. Cl.: H02G 1/00, H02G 1/06

(54) **Procédé de mise en place d'un harnais électrique dans un aéronef et outillage assurant la mise en oeuvre dudit procédé**
Einbauverfahren einem Kabelbaum in ein Luftfahrzeug, und Werkzeug, das die Umsetzung dieses Verfahrens garantiert.
Method for installing a wiring harness in an aircraft and tool for implementing said method

(30) Priorité: 28.11.2012 FR 1261343
(43) Date de publication de la demande: 04.06.2014
(73) Titulaire: Airbus Opérations SAS, 31060 Toulouse (FR)
(72) Inventeur: Durand, Yves, 31840 Aussonne (FR); Guering, Bernard, 31850 Montrabe (FR)
(74) Mandataire: Fantin, Laurent

(56) Documents cités:
- WO-A1-2007/057411
- DE-A1- 19 519 105

## Description

La présente invention se rapporte à un procédé de mise en place d'un harnais électrique dans un aéronef, ainsi qu'à un outillage assurant la mise en oeuvre dudit procédé.

Un aéronef comprend de nombreux fils électriques utilisés notamment pour le transport de l'énergie électrique ou le transfert d'informations, de commandes ou de signaux, entre différents éléments électriques de l'aéronef.

Pour la suite de la description, on entend par élément électrique, un élément relié à un ou plusieurs fils électriques, utilisant l'énergie électrique transporté par un fil électrique et/ou alimentant un fil électrique en énergie électrique et/ou susceptible de recevoir et/ou d'émettre une information, une commande ou un signal véhiculé par ledit fil électrique. A titre d'exemple, un élément électrique peut être un actionneur, un capteur, une carte électronique, un calculateur, une source en énergie électrique, un récepteur électrique ou autre.

Un harnais électrique comprend un ensemble de fils électriques qui sont regroupés et liés entre eux par des liens et/ou des colliers de serrage. Chaque fil électrique d'un harnais comprend à chaque extrémité un moyen de connexion afin de le relier à un autre fil ou à un élément électrique. Chaque fil électrique peut avoir un moyen de connexion qui lui est dédié ou un même moyen de connexion peut être commun à plusieurs fils.

Les fils électriques d'un harnais peuvent ne pas avoir la même longueur. Ainsi, plusieurs fils électriques peuvent former un sous-ensemble qui forme une branche du harnais.

Un harnais électrique suit un chemin particulier dans l'aéronef en fonction des éléments électriques reliés et des possibilités de cheminement laissées par les autres éléments présents dans l'aéronef.

Selon un mode d'implantation, dans un compartiment électrique et électronique d'un aéronef (E&E bay en anglais), certains harnais sont fixés à des traverses supportant le plancher séparant le compartiment électrique et électronique du cockpit ou de la cabine de l'aéronef, comme dans le document WO-A-2007/057411. Selon une première contrainte, un harnais électrique n'ayant pas une rigidité propre, il doit être relié à la structure de l'aéronef à intervalles réguliers par des attaches afin de lui faire suivre son chemin.

Selon une deuxième contrainte, un harnais électrique peut s'étendre sur plusieurs dizaines de mètres. Il est par conséquent encombrant et peut représenter une masse à soulever importante de l'ordre d'une centaine de kilogrammes.

Selon un mode opératoire, lors de son intégration, un harnais électrique doit être déroulé, puis placé correctement par rapport au chemin qu'il doit emprunter. En suivant, le harnais doit être fixé régulièrement à la structure de l'aéronef et/ou aux éléments présents dans l'aéronef, puis il doit être connecté aux différents éléments électriques.

Selon une troisième contrainte, ces différentes opérations doivent être réalisées avec beaucoup de minutie car un harnais électrique est fragile et ne doit en aucun cas être plié lors de ces différentes opérations.

Compte tenu de ces contraintes, l'intégration d'un harnais électrique dans un aéronef peut requérir une dizaine d'opérateurs.

Ces différents opérateurs doivent pouvoir manoeuvrer correctement le harnais électrique même dans des zones encombrées de nombreux équipements ou éléments déjà installés comme peut l'être un compartiment électrique et électronique.

Par conséquent, la présence de nombreux harnais électriques dans certaines zones comme le compartiment électrique et électronique conduit à imposer une contrainte supplémentaire lors de la conception et de l'implantation des différents équipements desdites zones. Ainsi, cette contrainte impose généralement de laisser des volumes accessibles relativement conséquents pour permettre l'intégration des harnais.

Or, cette contrainte va à l'encontre d'un principe important dans la conception d'un aéronef qui consiste à réduire le volume occupé par les éléments techniques afin d'augmenter celui occupé par les zones à forte rentabilité telles que la cabine des passagers ou la soute à bagages.

La présente invention vise à remédier aux inconvénients de l'art antérieur en proposant un procédé permettant de simplifier la mise en place d'un harnais électrique dans un aéronef, même dans une zone exiguë.

Selon l'invention, le procédé de mise en place d'un harnais électrique dans un aéronef se caractérise en ce qu'il consiste à utiliser des câbles avec des premières extrémités solidarisées au harnais et des moyens d'enroulement sur chacun desquels s'enroule un desdits câbles de manière à soulever ledit harnais en exerçant un effort de traction, les premières extrémités des câbles étant réparties le long d'au moins un tronçon du harnais de manière à répartir les efforts de traction sur ledit tronçon.

Avantageusement, les moyens d'enroulement sont répartis le long du chemin avec une répartition identique à celles des premières extrémités des câbles le long du harnais électrique. Cette configuration permet d'éviter de plier le harnais électrique.

De préférence, il convient d'exercer des efforts de traction successivement sur les câbles selon une séquence en suivant l'ordre d'implantation des moyens d'enroulement le long du chemin, à répéter cette séquence jusqu'à ce que le harnais électrique coïncide avec le chemin. Cette méthodologie permet d'obtenir une déformation progressive du harnais et de limiter les risques d'endommagement.

Avantageusement, l'enroulement des câbles est automatisé afin de le stopper dès que l'effort de traction dépasse un seuil prédéterminé.

La présente demande a également pour objet un outillage pour la mise en oeuvre du procédé précédemment mentionné. Selon l'invention, l'outillage se caractérise en ce qu'il comprend une pluralité de moyens d'enroulement et une pluralité de câbles, chaque câble comprenant une première extrémité solidarisée au harnais et s'enroulant sur un moyen d'enroulement, les premières extrémités des câbles étant réparties le long du harnais de manière à répartir les efforts de traction sur l'ensemble du harnais.

Selon une variante, un moyen d'enroulement comprend un enrouleur avec un tambour sur lequel s'enroule un câble. Selon un mode de réalisation, un enrouleur est accouplé à un moteur, et de préférence, il comprend une commande permettant de contrôler le fonctionnement du moteur.

Avantageusement, chaque enrouleur comprend un moyen pour mesurer l'effort de traction appliqué sur le câble.

Selon une autre variante, un moyen d'enroulement comprend une première poulie sur laquelle s'enroule un câble sur un secteur angulaire d'enroulement, ledit câble comprenant un premier brin relié au harnais et un second brin sur lequel il convient d'exercer un effort de traction pour soulever ledit harnais. De préférence, un moyen d'enroulement comprend une seconde poulie pour guider le second brin de manière à faire converger les seconds brins. Selon les cas, l'action sur le second brin est manuelle ou ce dernier s'enroule sur un enrouleur. Avantageusement, les moyens d'enroulement sont fixés sur la structure de l'aéronef de manière démontable, et des moyens pour solidariser de manière démontable les premières extrémités avec le harnais sont prévus.

D'autres caractéristiques et avantages ressortiront de la description qui va suivre de l'invention, description donnée à titre d'exemple uniquement, en regard des dessins annexés sur lesquels :
- Les figures 1A à 1E sont des schémas illustrant des étapes d'un procédé de mise en place d'un harnais électrique dans un aéronef en utilisant un outillage selon une première variante de l'invention,
- Les figures 2A et 2B sont des schémas illustrant un harnais électrique dans un aéronef respectivement à l'état déconnecté et à l'état connecté,
- La figure 3 est une coupe dans un plan parallèle au harnais électrique illustrant de manière schématique un outillage permettant la mise en place d'un harnais électrique dans un aéronef selon une première variante de l'invention,
- La figure 4 est une coupe de l'outillage de la figure 3 dans un plan perpendiculaire au harnais électrique,
- Les figures 5A à 5D sont des schémas illustrant différents outillages pour mettre en place plusieurs harnais électriques dans un aéronef,
- La figure 6 est un schéma illustrant une étape de la mise en place d'un harnais électrique dans un aéronef en utilisant un outillage selon une deuxième variante de l'invention,
- La figure 7 est une coupe dans un plan perpendiculaire aux harnais électriques illustrant de manière schématique un outillage permettant la mise en place d'harnais électriques dans un aéronef selon une deuxième variante de l'invention,
- La figure 8 est une coupe de l'outillage de la figure 7 dans un plan parallèle aux harnais électriques, et
- La figure 9 est une représentation schématique illustrant la mise en place de plusieurs harnais électriques en utilisant des outillages tels que décrits par les figures 7 et 8.

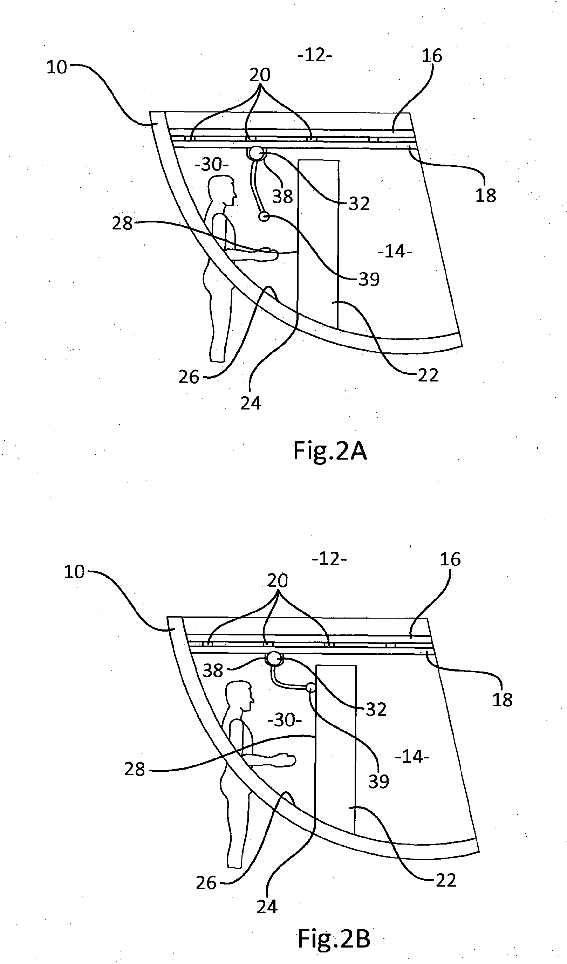

Sur les figures 2A et 2B, on a représenté en 10 un fuselage d'un aéronef selon une coupe transversale.

Pour la suite de la description, la direction longitudinale correspond à la direction qui s'étend de la pointe avant de l'aéronef à sa pointe arrière. Un plan transversal correspond à un plan perpendiculaire à la direction longitudinale.

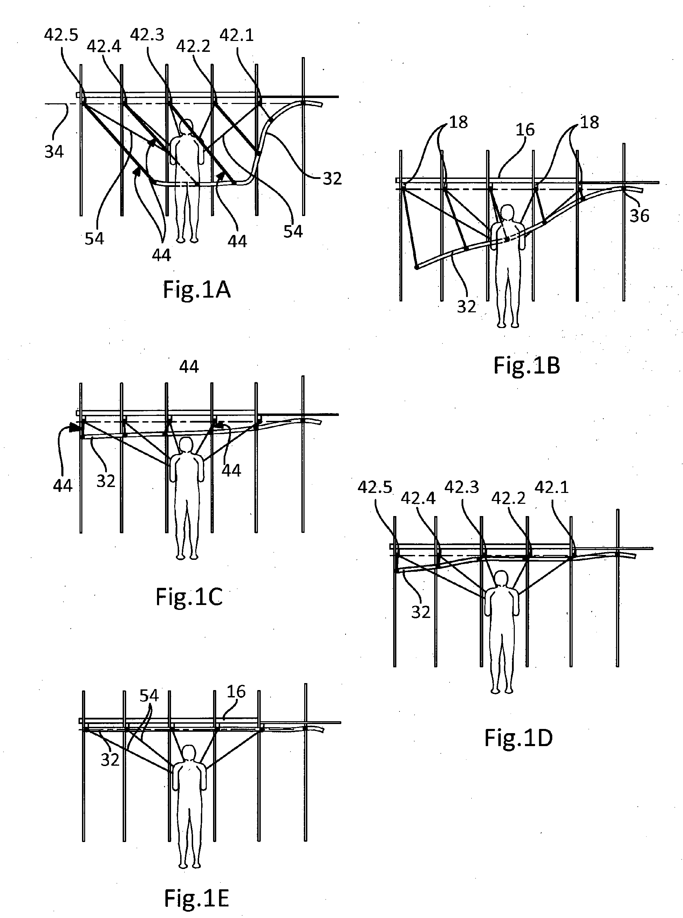

A l'intérieur du fuselage 10, au niveau du plan de coupe des figures 2A et 2B, l'aéronef comprend en partie supérieure une cabine 12 pour les passagers et en partie inférieure un compartiment électrique et électronique 14 séparé de la cabine 12 par un plancher 16. Comme illustré sur les figures 1A à 1E, le plancher 16 est supporté par des traverses 18 (qui s'étendent dans des plans transversaux) et des longerons 20 (qui s'étendent selon des directions parallèles à la direction longitudinale).

Le compartiment électrique et électronique 14 comprend de nombreux éléments électriques et électroniques, comme par exemple des calculateurs, des coeurs électriques. Selon un mode d'implantation, comme illustré sur les figures 2A et 2B, un meuble 22 (ou une rangée de meubles) longe le fuselage 10. Ainsi, la base 24 du meuble 22 comprend une arête qui est plaquée contre la paroi intérieure 26 du fuselage. Dans ce cas, la face arrière 28 du meuble 22, la paroi intérieure 26 du fuselage et le plancher 16 délimitent une zone exiguë 30 dans laquelle est intégré au moins un harnais électrique 32.

Lorsqu'il est mis en place, le harnais électrique 32 suit un chemin 34. Le chemin 34 est illustré en pointillés sur les figures 1A à 1E.

Selon un exemple d'intégration, le chemin 34 est sensiblement rectiligne, orienté selon la direction longitudinale et disposé juste en dessous du plancher 16.

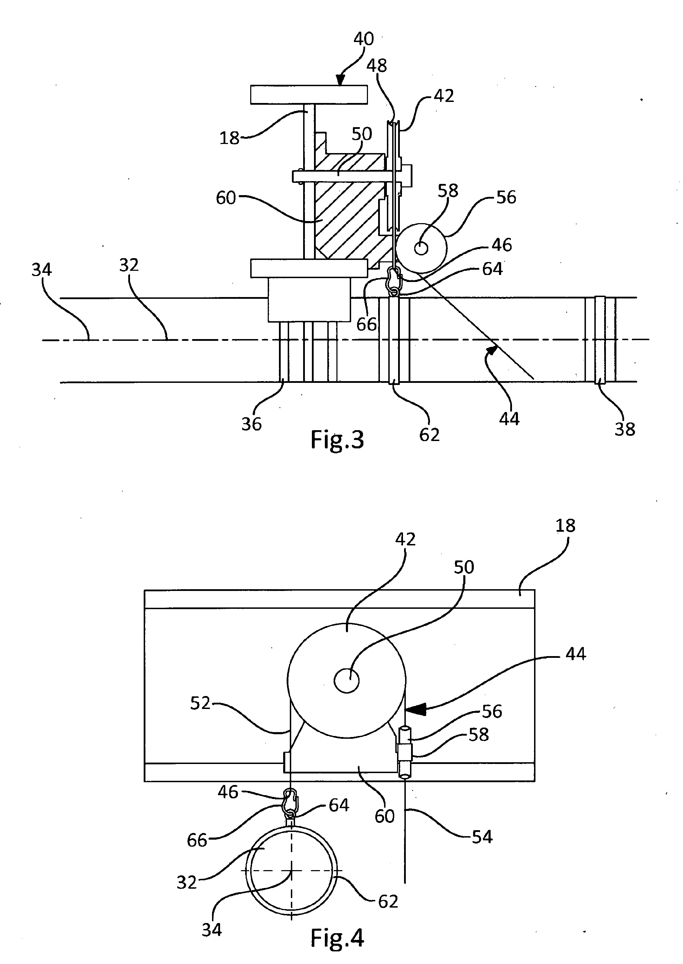

Une fois installé, le harnais électrique 32 est relié aux traverses 18 grâce à des attaches 36, comme illustré sur la figure 3. Le harnais électrique 32 comprend des fils électriques maintenus regroupés par des colliers 38.

Le harnais comprend des extrémités et éventuellement une ou plusieurs ramifications. La ou les extrémités du harnais électriques et les ramifications comprennent généralement des moyens de connexion 39 (visibles sur la figure 2B).

Le harnais électrique 32, ses formes, les attaches 36 et leur répartition, les colliers 38 et leur répartition, les moyens de connexion 39 ne sont pas plus décrits car ils sont connus de l'homme du métier.

Même si elle est décrite pour l'intégration d'un harnais électrique dans une zone exigüe d'un compartiment électrique et électronique, la présente invention n'est pas limitée à cette application et peut s'appliquer à toutes les zones de l'aéronef. De plus, l'invention peut être utilisée pour l'ensemble du harnais électrique ou pour au moins un tronçon du harnais électrique. Elle peut être utilisée pour mettre en place un harnais électrique qui ne repose pas au sol. Ainsi, l'invention peut s'appliquer si le harnais électrique est suspendu sous un plafond ou fixé le long d'une paroi inclinée (non horizontale). Généralement, le harnais électrique est relié directement ou indirectement à la structure de l'aéronef 40. Ainsi, le harnais électrique peut être fixé à un support relié à la structure de l'aéronef. En complément, le harnais électrique 32 peut être relié à un ou plusieurs support(s) présent(s) dans un aéronef.

Le chemin 34 suivi par le harnais n'est pas nécessairement rectiligne.

Sur les figures 1A à 1E, 3 et 4, on a représenté une première variante d'un outillage permettant la mise en place d'un harnais électrique 32 le long d'un chemin 34 prédéfini.

Cet outillage comprend une pluralité de poulies 42 fixes par rapport à la structure de l'aéronef 40 et réparties à proximité et le long du chemin 34, ainsi qu'une pluralité de câbles 44, un pour chaque poulie 42, chacun d'eux comprenant une première extrémité 46 reliée au harnais électrique 32.

Chaque poulie 42 comprend une gorge 48 dans laquelle se loge le câble correspondant 44 et un axe de rotation 50 solidaire de la structure de l'aéronef 40. Chaque câble 44 s'enroule sur la poulie 42 sur un secteur angulaire d'enroulement, et passe au-dessus de l'axe de rotation 50. De part et d'autre du secteur angulaire d'enroulement, le câble 44 comprend un premier brin 52 qui s'étend du secteur d'enroulement jusqu'à la première extrémité 46 reliée au harnais électrique et un second brin 54 actionnable. L'axe de rotation 50 de la poulie est disposée au-dessus du chemin 34 de manière à ce que lorsque le second brin 54 est soumis à une force dont une composante est orientée vers le bas, le premier brin 52 exerce un effort sur le harnais électrique dont une composante est orientée vers le haut.

Pour la suite de la description, la direction parallèle à la force correspondant au poids du harnais électrique est considérée comme la direction verticale. La direction horizontale est perpendiculaire à cette direction verticale. L'orientation vers le haut est en sens opposé de la force correspondant au poids du harnais électrique. L'orientation vers le bas est orientée dans le même sens que la force correspondant au poids du harnais électrique.

Selon un mode de réalisation, le secteur angulaire d'enroulement correspond approximativement à la moitié supérieure de la poulie 42.

Pour assurer un meilleur positionnement du harnais électrique 32 par rapport au chemin 34, l'axe de rotation 50 de la poulie 42 est avantageusement parallèle au chemin 34, comme illustré sur les figures 3 et 4.

De préférence, l'axe de rotation 50 de la poulie 42 est décalée dans un plan transversal, selon la direction horizontale, par rapport au chemin 34 de manière à ce que la tangente à la gorge 48 qui est verticale et du côté du premier brin 52 passe par le chemin 34. Cette configuration assure un meilleur positionnement du harnais électrique 32 par rapport au chemin 34.

Selon une autre caractéristique de l'invention, les poulies 42 sont disposées le long du chemin 34 avec une répartition identique à celle des premières extrémités 46 des câbles 44 le long du harnais électrique 32. Cette configuration permet d'éviter de plier le harnais électrique.

Avantageusement, le nombre de câbles et la répartition de leurs premières extrémités 46 le long du harnais électrique sont déterminés afin de répartir de manière sensiblement homogène la reprise du poids du harnais par tous les câbles 44.

De préférence, les poulies 42 sont réparties le long du chemin 34 en fonction de la géométrie du chemin afin que le harnais électrique 32 suive au mieux ledit chemin. Ainsi, les zones courbes du chemin 34 comprennent au moins une poulie 42.

De préférence, les poulies 42 sont implantées le long du chemin 34 avec un espacement régulier entre elles.

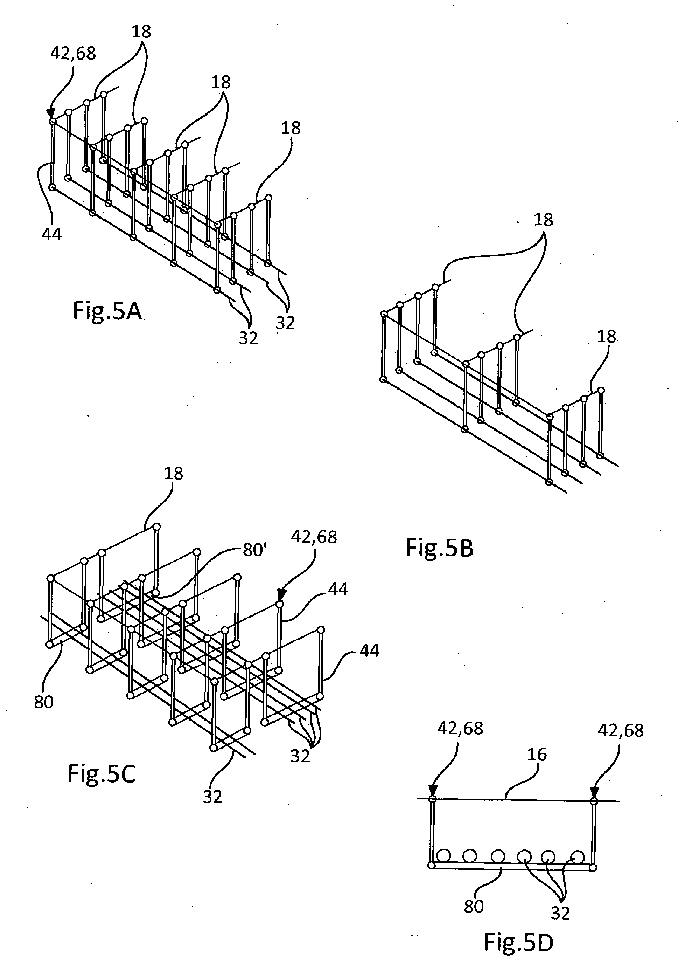

Selon un premier mode de réalisation, l'outillage comprend une poulie 42 à proximité de chaque attache 36, comme illustré sur les figures 1A à 1E et 5A. Dans le cas d'un harnais électrique relié à toutes les traverses 18 par des attaches 36, chaque traverse 18 supporte une poulie 42.

Selon un autre mode de réalisation, les poulies peuvent être réparties avec un espacement régulier plus ou moins important ou réparties de manière non homogène. Selon un mode de réalisation illustré sur la figure 5B, l'outillage comprend une poulie 42, une traverse sur deux.

De préférence, chaque poulie 42 prévue pour soulever le harnais électrique 32 est associée à une deuxième poulie 56 prévue pour guider le second brin 54. De préférence, chaque deuxième poulie 56 a un axe de rotation 58 perpendiculaire à l'axe de rotation 50 de la première poulie 42. Avantageusement, la deuxième poulie 56 est disposée dans un plan vertical tangent à la gorge 48 de la première poulie 42 du côté du second brin 54.

Les deuxièmes poulies 56 permettent de faire converger les seconds brins 54, par exemple vers un opérateur comme illustré sur les figures 1A à 1E.

Selon un mode de réalisation illustré sur les figures 3 et 4, chaque paire de poulies 42 et 56 est montée sur un support 60 lui-même fixé sur la structure de l'aéronef 40 et plus particulièrement sur une traverse 18.

Selon un mode de réalisation, le support 60 est fixé sur la structure de l'aéronef 40 de manière démontable pour pouvoir être retiré après la mise en place du harnais électrique. Cette configuration permet de ne pas augmenter la masse embarquée.

Selon un mode de réalisation illustré sur la figure 3, la première extrémité 46 de chaque câble 44 est reliée au harnais électrique par l'intermédiaire d'un collier 62. De préférence, les colliers 62 sont destinés à rester sur le harnais électrique. Les colliers 38 utilisés pour maintenir groupés les fils du harnais électrique peuvent être utilisés comme colliers 62 pour assurer la liaison avec les câbles 44. Avantageusement, chaque collier 62 comprend un oeillet 64 et la première extrémité 46 de chaque câble 44 comprend un mousqueton 66 pour la solidariser rapidement et de manière démontable à l'oeillet 64. D'autres solutions techniques pourraient être envisagées pour solidariser rapidement et de manière démontable la première extrémité de chaque câble avec le harnais électrique. Selon un mode opératoire illustré sur les figures 1A à 1E, le harnais électrique 32 est déroulé et pré-positionné au sol en début de la zone comme illustré sur la figure 1A. Une partie du harnais peut déjà être fixée.

Dans un premier temps, après avoir installé l'outillage sur la structure de l'avion 40, les premières extrémités 46 des câbles 44 sont solidarisées au harnais électrique 32.

L'opérateur tire successivement et de manière progressive sur les seconds brins 54 des câbles.

Pour la suite de la description, comme illustré sur les figures 1A à 1E, les premières poulies sont référencées 42.1 à 42.5 en suivant l'ordre d'implantation le long du chemin 54, en partant de la poulie la plus proche du harnais.

Selon un mode opératoire, l'opérateur tire sur le second brin 54.1 de la poulie 42.1 la plus proche du harnais en exerçant une certaine tension. En suivant, il tire sur le second brin 54.2 de la poulie 42.2 en exerçant sensiblement la même tension que sur la première. Il poursuit ainsi jusqu'à la dernière poulie 42.5. Il reproduit cette séquence en repartant de la première poulie 42.1 jusqu'à la dernière poulie 42.5 autant de fois que nécessaire, comme illustré sur la figure 1B jusqu'à ce que le harnais électrique coïncide avec le chemin 34 à proximité de la première poulie 42.1 comme illustré sur la figure 1C.

A cet instant, il peut solidariser le harnais électrique avec une attache 36 à proximité de la poulie 42.1. Désormais, l'opérateur n'a plus besoin d'agir sur le second brin 54.1. Il continue à exercer des tensions sur les seconds brins restants 54.2 à 54.5 de manière successive et progressive. Petit à petit, le harnais électrique coïncide avec le chemin 34 sur une plus grande longueur. Les attaches 36 sont mises en place au fur et à mesure dès que le harnais coïncide avec le chemin. Comme illustré sur la figure 1D, le harnais électrique 32 coïncide avec le chemin 34 jusqu'à la poulie 42.3. L'opérateur n'agit plus que sur les brins 54.4 et 54.5 jusqu'à ce que le harnais coïncide avec le chemin sur toute la longueur. Comme illustré sur la figure 1E, toutes les attaches 36 sont mises en place. A cet instant, les extrémités du harnais ou les extrémités des branches pendent comme illustré sur la figure 2A.

En suivant, l'opérateur peut connecter le harnais électrique 32 avec le ou les éléments électriques, comme illustré sur la figure 2B.

En suivant, les câbles 44 sont désolidarisés du harnais électrique 32 et l'outillage est démonté.

Selon le procédé de l'invention, les actions sur les différents brins doivent être les plus progressives possible afin de répartir les efforts de traction sur l'ensemble du harnais. Ainsi, le fractionnement des efforts sur la pluralité de câbles conduit à faiblement solliciter le harnais ponctuellement, ce qui permet de réduire les risques d'endommagement.

Selon cette variante, les efforts appliqués sur les seconds brins 54 sont générés manuellement par un opérateur.

En variante, l'extrémité libre de chaque second brin 54 peut s'enrouler sur un enrouleur, un pour chaque brin, qui gère l'enroulement du second brin correspondant.

Chaque enrouleur comprend un tambour sur lequel s'enroule le câble. La rotation du tambour est de préférence mécanisée, par exemple grâce à un ressort ou en accouplant le tambour à un moteur.

Chaque enrouleur peut comprendre un moyen pour mesurer l'effort de traction appliqué sur le second brin qui commande l'enroulement dudit second brin lorsque l'effort de traction est inférieur à un premier seuil prédéterminé, et qui commande l'arrêt de l'enroulement lorsque l'effort de traction dépasse un second seuil prédéterminé.

Cette variante permet d'automatiser l'action sur les câbles et de paramétrer les efforts de traction qui ne dépendent plus ainsi de l'appréciation de l'opérateur. Comme précédemment, les enrouleurs commandent l'enroulement des câbles successivement d'un câble à l'autre en partant d'une première extrémité jusqu'à l'autre extrémité, en répétant cette séquence jusqu'à ce que le harnais coïncide avec le chemin.

Avantageusement, l'outillage comprend des moyens pour empêcher le harnais électrique de venir en contact avec l'enrouleur ou le plancher et limiter les risques d'endommagement du harnais. Selon un mode de réalisation, le mousqueton 66 peut être utilisé à cet effet. Lorsqu'il vient en contact avec l'enrouleur, l'effort de traction augmente significativement et dépasse le second seuil prédéterminé, ce qui conduit à stopper l'enroulement. D'autres moyens, comme un contrôle visuel ou un calcul de longueur de câble peuvent être utilisés pour stopper l'enroulement avant que le harnais ne bute contre l'enrouleur ou le plancher.

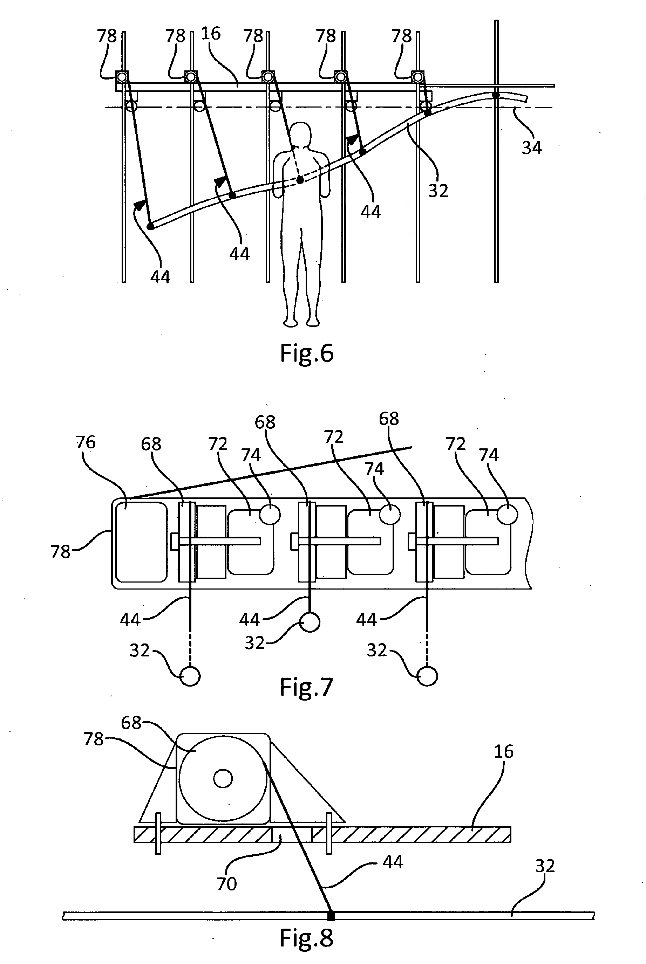

Selon une autre variante illustrée sur les figures 6 à 9, chaque poulie 42 peut être remplacée par un enrouleur 68. Selon cette variante, l'outillage comprend une pluralité d'enrouleurs 68 disposés le long du chemin 34 et chaque câble 44 ne comprend qu'un seul brin dont une première extrémité 46 est reliée au harnais et dont l'autre extrémité s'enroule dans l'enrouleur 68.

Avantageusement, selon cette variante, les enrouleurs 68 sont disposés sur le plancher 16 ( et non au-dessous comme les poulies 42 des variantes précédentes) et des orifices 70 (un pour chaque câble 44) sont prévus dans le plancher 16 pour permettre le passage chacun d'un câble.

Selon cette variante, chaque enrouleur 68 comprend un tambour sur lequel s'enroule le câble. La rotation du tambour est de préférence mécanisée, par exemple grâce à un ressort ou en accouplant le tambour à un moteur 72. Avantageusement, lorsque le tambour est accouplé à un moteur 72, chaque enrouleur 68 comprend une commande 74 permettant de contrôler le fonctionnement du moteur.

De préférence, chaque commande 74 est contrôlée à distance grâce à une liaison filaire ou par une liaison de type sans fil.

Selon un mode de réalisation, les commandes 74 sont contrôlées à distance par un opérateur grâce à une télécommande.

Selon un mode de réalisation, chaque enrouleur 68 comprend un moyen pour mesurer l'effort de traction appliqué sur le câble 44 qui renseigne la commande 74 qui déclenche l'enroulement dudit câble lorsque l'effort de traction est inférieur à un premier seuil prédéterminé, et qui stoppe l'enroulement du câble lorsque l'effort de traction dépasse un second seuil prédéterminé.

Selon un autre mode de réalisation, les commandes 74 peuvent être contrôlées par un système de contrôle 76. Ce système de contrôle 76 peut comprendre des moyens pour déterminer la position réelle du harnais lors de sa mise en place (radar ou autre) et un logiciel de morphose (« morphing » en anglais) qui permet en fonction de la position réelle du harnais de déterminer la position suivante que les enrouleurs 68 imposeront au harnais.

Quelle que soit la variante de l'invention, l'outillage comprend une pluralité de moyens d'enroulement (enrouleurs et/ou poulies) et une pluralité de câbles 44, chaque câble comprenant une première extrémité 46 solidarisée au harnais et s'enroulant sur un moyen d'enroulement 42, 68, les premières extrémités 46 des câbles 44 étant réparties le long d'au moins un tronçon du harnais de manière à répartir les efforts de traction sur ledit tronçon.

De préférence, les moyens d'enroulement sont solidarisés de manière démontable à la structure de l'aéronef et/ou à un ou des supports.

La variante avec les enrouleurs assure une gestion automatisée du mouvement du harnais et une meilleure gestion des efforts de traction exercés tout le long du harnais. De plus, cette variante est plus pratique à utiliser, notamment du fait que l'outillage est plus facile à monter et démonter étant situé dans une zone plus accessible.

En variante, au moins un moyen d'enroulement comprend un moyen pour démultiplier l'effort de traction, comme par exemple un système de palan.

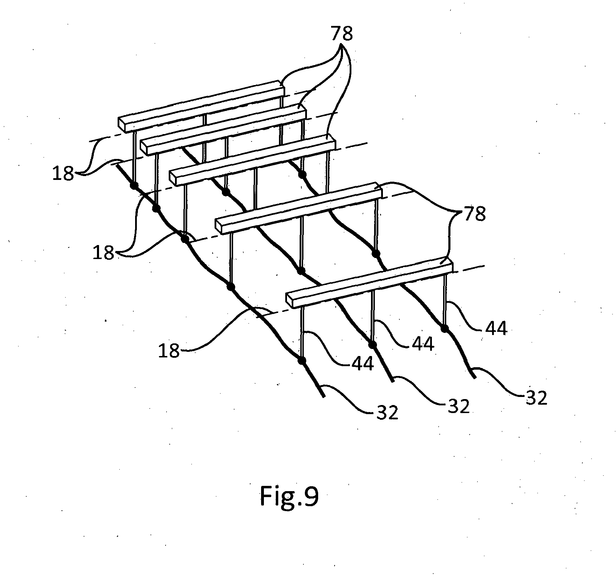

Selon une première solution, le mouvement de chaque harnais est contrôlé par des poulies et des enrouleurs qui lui sont dédiés, comme illustré sur les figures 5A, 5B et 9.

Selon une variante illustrée sur la figure 5A, des poulies et des enrouleurs sont prévus à chaque traverse. Selon d'autres solutions illustrées sur les figures 5B et 9, l'espacement entre les poulies ou les enrouleurs est différent de l'espacement entre les traverses. Ainsi, certaines traverses ne sont pas équipées de poulies ou d'enrouleurs.

Dans le cas de la variante avec des enrouleurs 68, les enrouleurs 68 prévus au droit d'une même traverse peuvent être intégrés dans un bloc 78 (voir figures 7 et 9) qui peut être fixé de manière démontable sur le plancher 16.

Selon d'autres solutions illustrées sur les figures 5C et 5D, les câbles 44 ne sont pas reliés directement aux harnais. Selon une solution non visible, le câble 44 peut former une boucle à travers laquelle passe un ou plusieurs harnais.

Selon une solution, les extrémités 46 de deux câbles disposés dans un plan transversal sont reliées par une barre rigide 80 sur laquelle reposent un ou plusieurs harnais électriques 32. Les mouvements des deux câbles sont synchronisés de manière à ce que la barre rigide 80 s'élève sensiblement à l'horizontale.

Selon un mode de réalisation illustré sur la figure 5D, dans un plan transversal, tous les harnais sont supportés par la même barre 80. Selon un mode de réalisation illustré sur la figure 5C, dans un plan transversal, un ou plusieurs harnais sont supportés par une première barre 80 et un ou plusieurs harnais sont supportés par une seconde barre 80'. Le nombre de barres rigides dans un même plan transversal peut varier et n'est pas limité à deux, et dépend essentiellement du poids des harnais.

## Revendications

1. Procédé de mise en place d'un harnais électrique (32) dans un aéronef, ledit harnais (32) étant fixé dans l'aéronef (40) de manière à suivre un chemin (34), ledit procédé consistant à soulever ledit harnais et à l'attacher lorsque le harnais (32) coïncide avec ledit chemin (34), **caractérisé en ce que** le procédé consiste à utiliser des câbles (44) avec des premières extrémités (46) solidarisées au harnais (32) et des moyens d'enroulement (42, 68) sur chacun desquels s'enroule un desdits câbles de manière à soulever ledit harnais en exerçant un effort de traction, les premières extrémités (46) des câbles (44) étant réparties le long d'au moins un tronçon du harnais de manière à répartir les efforts de traction sur ledit tronçon.

2. Procédé de mise en place d'un harnais électrique (32) dans un aéronef selon la revendication 1, **caractérisé en ce que** les moyens d'enroulement (42, 68) sont répartis le long du chemin (34) avec une répartition identique à celles des premières extrémités (46) des câbles (44) le long du harnais électrique (32).

3. Procédé de mise en place d'un harnais électrique (32) dans un aéronef selon la revendication 1 ou 2, **caractérisé en ce qu'**il consiste à exercer des efforts de traction successivement sur les câbles (44) selon une séquence en suivant l'ordre d'implantation des moyens d'enroulement (40, 68) le long du chemin (34), à répéter cette séquence jusqu'à ce que le harnais électrique (32) coïncide avec le chemin (34).

4. Procédé de mise en place d'un harnais électrique (32) dans un aéronef selon l'une quelconque des revendications précédentes, **caractérisé en ce qu'**il consiste à démonter les moyens d'enroulement (42, 68) et à désolidariser les câbles (44) du harnais électrique lorsque le harnais électrique est fixé.

5. Outillage adapté pour mettre en place un harnais électrique (32) dans un aéronef, ledit harnais (32) devant être fixé dans l'aéronef (40) de manière à suivre un chemin (34), **caractérisé en ce qu'**il comprend une pluralité de moyens d'enroulement (42, 68) et une pluralité de câbles (44), chaque câble comprenant une première extrémité (46) solidarisée au harnais et s'enroulant sur un moyen d'enroulement (44, 68), les premières extrémités (46) des câbles (44) étant réparties le long d'au moins un tronçon du harnais de manière à répartir les efforts de traction sur ledit tronçon.

6. Outillage selon la revendication 5, **caractérisé en ce qu'**un moyen d'enroulement (42, 68) comprend un enrouleur (68) avec un tambour sur lequel s'enroule un câble (44).

7. Outillage selon la revendication 6, **caractérisé en ce qu'**un enrouleur (68) est accouplé à un moteur (72).

8. Outillage selon la revendication 7, **caractérisé en ce qu'**un enrouleur (68) comprend une commande (74) permettant de contrôler le fonctionnement du moteur (72).

9. Outillage selon la revendication 8, **caractérisé en ce qu'**il comprend un système de contrôle (76) pour contrôler les commandes (74).

10. Outillage selon la revendication 9, **caractérisé en ce que** le système de contrôle (76) comprend des moyens pour déterminer la position réelle du harnais lors de sa mise en place et un logiciel qui permet en fonction de la position réelle du harnais de déterminer la position suivante.

11. Outillage selon l'une quelconque des revendications 6 à 8, **caractérisé en ce que** chaque enrouleur (68) comprend un moyen pour mesurer l'effort de traction appliqué sur le câble (44).

12. Outillage selon l'une des revendications 5 à 11, **caractérisé en ce qu'**un moyen d'enroulement (42, 68) comprend une première poulie (22) sur laquelle s'enroule un câble sur un secteur angulaire d'enroulement, ledit câble comprenant un premier brin (52) relié au harnais et un second brin (54) sur lequel il convient d'exercer un effort de traction pour soulever ledit harnais (32).

13. Outillage selon la revendication 12, **caractérisé en ce qu'**un moyen d'enroulement comprend une seconde poulie (56) pour guider le second brin (54) de manière à faire converger les seconds brins (54).

14. Outillage selon l'une des revendications 5 à 13, **caractérisé en ce que** les moyens d'enroulement sont fixés sur la structure de l'aéronef (40) de manière démontable.

15. Outillage selon l'une des revendications 5 à 14, **caractérisé en ce qu'**il comprend des moyens pour solidariser de manière démontable les premières extrémités (46) avec le harnais (42).

## Patentansprüche

1. Verfahren zum Einbau eines elektrischen Kabelbaums (32) in ein Luftfahrzeug, wobei der Kabelbaum (32) entlang einem Weg (34) im Luftfahrzeug (40) befestigt wird und wobei das Verfahren darin besteht, dass der Kabelbaum angehoben und montiert wird, bis der Kabelbaum (32) mit diesem Weg (34) übereinstimmt, **dadurch gekennzeichnet, dass** das Verfahren darin besteht, dass Kabel (44) verwendet werden, deren erste Enden (46) am Kabelbaum (32) angebracht sind, und dass Aufrollmittel (42, 68) verwendet werden, auf denen jeweils eines der Kabel abrollt, um durch Ausüben einer Zugkraft den Kabelbaum anzuheben, wobei die ersten Enden (46) der Kabel (44) entlang wenigstens eines Abschnitts des Kabelbaums verteilt sind, um die Zugkräfte über den Abschnitt zu verteilen.

2. Verfahren zum Einbau eines elektrischen Kabelbaums (32) in ein Luftfahrzeug nach Anspruch 1, **dadurch gekennzeichnet, dass** die Aufrollmittel (42, 68) entlang des Wegs (34) mit einer Verteilung verteilt sind, die mit derjenigen der ersten Enden (46) der Kabel (44) entlang dem elektrischen Kabelbaum (32) identisch sind.

3. Verfahren zum Einbau eines elektrischen Kabelbaums (32) in ein Luftfahrzeug nach Anspruch 1 oder 2, **dadurch gekennzeichnet, dass** dieses darin besteht, dass die Zugkräfte nach und nach auf die Kabel (44) in einer Reihenfolge ausgeübt werden, die der Einbaureihenfolge der Aufrollmittel (40, 68) entlang des Wegs (34) entspricht, und dass diese Reihenfolge wiederholt wird, bis der elektrische Kabelbaum (32) mit dem Weg (34) übereinstimmt.

4. Verfahren zum Einbau eines elektrischen Kabelbaums (32) in ein Luftfahrzeug nach einem der vorhergehenden Ansprüche, **dadurch gekennzeichnet, dass** dieses darin besteht, die Aufrollmittel (42, 68) abzubauen und die Kabel (44) vom elektrischen Kabelbaum zu lösen, wenn der elektrische Kabelbaum befestigt ist.

5. Werkzeug, das zum Einbau eines elektrischen Kabelbaums (32) in ein Luftfahrzeug geeignet ist, wobei der Kabelbaum (32) im Luftfahrzeug (40) entlang einem Weg (34) befestigt werden muss, **dadurch gekennzeichnet, dass** dieses eine Vielzahl von Aufrollmitteln (42, 68) und eine Vielzahl von Kabeln (44) aufweist, wobei jedes Kabel ein erstes Ende (46) aufweist, das am Kabelbaum angebracht ist und auf einem Aufrollmittel (44, 68) abrollt, wobei die ersten Enden (46) der Kabel (44) entlang wenigstens eines Abschnitts des Kabelbaums verteilt sind, um die Zugkräfte über den Abschnitt zu verteilen.

6. Werkzeug nach Anspruch 5, **dadurch gekennzeichnet, dass** ein Aufrollmittel (42, 68) eine Rolle (68) mit einer Trommel aufweist, auf der sich das Kabel (44) aufrollt.

7. Werkzeug nach Anspruch 6, **dadurch gekennzeichnet, dass** die Rolle (68) an einem Motor (72) gekoppelt ist.

8. Werkzeug nach Anspruch 7, **dadurch gekennzeichnet, dass** die Rolle (68) eine Steuereinheit (74) umfasst, die es gestattet, die Funktion des Motors (72) zu steuern.

9. Werkzeug nach Anspruch 8, **dadurch gekennzeichnet, dass** dieses ein Steuersystem (76) aufweist, um die Steuereinheit (74) zu steuern.

10. Werkzeug nach Anspruch 9, **dadurch gekennzeichnet, dass** das Steuersystem (76) Mittel aufweist, um die tatsächliche Position des Kabelbaums bei seinem Einbau zu bestimmen, und ein Programm aufweist, das es gestattet, die nachfolgende Position in Abhängigkeit von der tatsächlichen Position des Kabelbaums zu bestimmen.

11. Werkzeug nach einem der vorhergehenden Ansprüche 6 bis 8, **dadurch gekennzeichnet, dass** jeder Aufroller (68) ein Mittel aufweist, um die auf das Kabel (44) ausgeübte Zugkraft zu messen.

12. Werkzeug nach einem der Ansprüche 5 bis 11, **dadurch gekennzeichnet, dass** die Aufrollmittel (42, 68) eine erste Rolle (22) aufweisen, auf der ein Kabel über einen Abrollwinkelbereich abrollt, wobei das Kabel einen ersten Strang (52) aufweist, der mit dem Kabelbaum verbunden ist, und einen zweiten Strang (54), über den zweckmäßigerweise die Zugkraft zum Anheben des Kabelstrangs (32) ausgeübt wird.

13. Werkzeug nach Anspruch 12, **dadurch gekennzeichnet, dass** ein Abrollmittel eine zweite Rolle (56) aufweist, um den zweiten Strang (54) so zu führen, dass die zweiten Stränge (54) konvergieren.

14. Werkzeug nach einem der Ansprüche 5 bis 13, **dadurch gekennzeichnet, dass** die Aufrollmittel auf abnehmbare Weise an der Struktur des Luftfahrzeugs (40) befestigt sind.

15. Werkzeug nach einem der Ansprüche 5 bis 14, **dadurch gekennzeichnet, dass** es Mittel aufweist, um auf abnehmbare Weise die ersten Enden (46) mit dem Kabelbaum (42) zu verbinden.

## Claims

1. Method for installing a wiring harness (32) in an aircraft, said harness (32) being fastened inside the aircraft (40) so as to follow a path (34), said method consisting in lifting up said harness and attaching it when the harness (32) coincides with said path (34), **characterized in that** the method consists in using cables (44) having first ends (46) secured to the harness (32) and winding means (42, 68) onto each of which one of said cables is wound so as to lift up said harness by exerting a tensile force, the first ends (46) of the cables (44) being distributed along at least a section of the harness so as to distribute the tensile forces over said section.

2. Method for installing a wiring harness (32) in an aircraft according to Claim 1, **characterized in that** the distribution of the winding means (42, 68) along the path (34) is identical to the distributions of the first ends (46) of the cables (44) along the wiring harness (32).

3. Method for installing a wiring harness (32) in an aircraft according to Claim 1 or 2, **characterized in that** it consists in exerting tensile forces successively on the cables (44), according to a sequence following the order of installation of the winding means (40, 68) along the path (34), and in repeating this sequence until the wiring harness (32) coincides with the path (34).

4. Method for installing a wiring harness (32) in an aircraft according to any one of the preceding claims, **characterized in that** it consists in dismantling the winding means (42,68) and removing the cables (44) from the wiring harness once the wiring harness is fastened.

5. Tool designed for installing a wiring harness (32) in an aircraft, wherein said harness (32) must be fastened in the aircraft (40) so as to follow a path (34), **characterized in that** it comprises a plurality of winding means (42, 68) and a plurality of cables (44), wherein each cable comprises a first end (46) which is secured to the harness and is wound onto a winding means (44, 68), the first ends (46) of the cables (44) being distributed along at least a section of the harness so as to distribute the tensile forces over said section.

6. Tool according to Claim 5, **characterized in that** a winding means (42, 68) comprises a winder (68) having a drum onto which a cable (44) is wound.

7. Tool according to Claim 6, **characterized in that** a winder (68) is coupled to a motor (72).

8. Tool according to Claim 7, **characterized in that** a winder (68) comprises α controller (74) by means of which the operation of the motor (72) can be controlled.

9. Tool according to Claim 8, **characterized in that** it comprises a control system (76) for controlling the controllers (74).

10. Tool according to Claim 9, **characterized in that** the control system (76) comprises means for determining the actual position of the harness during installation of the latter and software by means of which the actual position of the harness can be used to determine the following position.

11. Tool according to any one of Claims 6 to 8, **characterized in that** each winder (68) comprises a means for measuring the tensile force applied to the cable (44).

12. Tool according to one of Claims 5 to 11, **characterized in that** a winding means (42, 68) comprises a first pulley (22) onto which a cable is wound on a wrap angle sector, said cable comprising a first strand (52) connected to the harness and a second strand (54) upon which a tensile force is to be exerted so as to lift up said harness (32).

13. Tool according to Claim 12, **characterized in that** a winding means comprises a second pulley (56) for guiding the second strand (54) such that the second strands (54) converge.

14. Tool according to one of Claims 5 to 13, **characterized in that** the winding means are fastened to the structure of the aircraft (40) in a dismantlable manner.

15. Tool according to one of Claims 5 to 14, **characterized in that** it comprises means for securing the first ends (46) to the harness (42) in a dismantlable manner.
